Europäisches Patentamt

European Patent Office

Office européen des brevets

(11) Veröffentlichungsnummer: **0 320 830**
**A2**

(12) **EUROPÄISCHE PATENTANMELDUNG**

(21) Anmeldenummer: 88120675.9

(51) Int. Cl.⁴: **H01F 7/22**

(22) Anmeldetag: **10.12.88**

(30) Priorität: **18.12.87 DE 3743033**

(43) Veröffentlichungstag der Anmeldung:
**21.06.89 Patentblatt 89/25**

(84) Benannte Vertragsstaaten:
**AT CH DE FR GB IT LI SE**

(71) Anmelder: **Asea Brown Boveri
Aktiengesellschaft
Kallstadter Strasse 1
D-6800 Mannheim 31(DE)**

(72) Erfinder: **Dustmann, Cord-Heinrich, Dr.
Diemstrasse 10
D-6940 Weinheim(DE)**

(74) Vertreter: **Rupprecht, Klaus, Dipl.-Ing. et al
c/o BBC Brown Boveri Aktiengesellschaft
ZPT Postfach 100351 Kallstadter Strasse 1
D-6800 Mannheim 1(DE)**

(54) **Magnetsystem.**

(57) Supraleitendes Magnetsystem

Bei bekannten supraleitenden Magnetsystemen ist vorgesehen, daß die Kältemittelversorgung zentral von einer Kälteanlage aus erfolgt und die Stromeinspeisung jeweils separat oder über Spezialmagnete am Anfang und am Ende eines aus supraleitenden Elektromagneten gebildeten Abschnittes vorgenommen wird.

Ein neuartiges Magnetsystem sieht vor, daß zwischen die Kälteanlage (12) und den die Magnetspulen (24) der Elektromagnete (17) aufnehmenden Magnetkryostaten (21, 31, 41) ein Kontrollkryostat (20, 30, 40) angeordnet ist, der gleichzeitig eine Stromzuführung (13) aufweist, aus welcher die dem jeweiligen Kontrollkryostaten (20, 30, 40) zugeordenten Magnetkryostaten (21, 31, 41) über Supraleiterkabel (25) mit dem zur Auferregung erforderlichen Strom versorgt werden.

Das neuartige Magnetsystem ist insbesondere vorgesehen für den Einsatz in Beschleunigereinheiten.

Fig. 2

## Magnetsystem

Die Erfindung betrifft ein Magnetsystem, das aus wenigstens einem Elektromagneten mit einer aus supraleitendem Draht gebildeten Magnetspule, einem dem Elektromagneten zugeordneten Kryostat sowie aus einem Stromanschluß zur Stromversorgung für die Auferregung der Magnetspule jedes Elektromagneten zusammengesetzt ist.

Supraleitende Magnete stellen das bedeutendste und bestbeherrschte Einsatzgebiet für die Supraleitungstechnik dar. Der Vorteil supraleitender Magnetsysteme ist insbesondere in den erreichbaren hohen magnetischen Flußdichten bei vergleichsweise geringem Bedarf an elektrischer Leistung zu sehen sowie ihrem geringen Raumbedarf und Gewicht mit der daraus resultierenden einfachen Handhabung.

Neben der Verwendung für elektrodynamische Schwebefahrzeuge kommt der Einsatz von supraleitenden Magnetsystemen insbesondere für meßtechnische Anwendungen, z. B. Beschleunigereinheiten, Blasenkammern, sowie neuerdings für die Kernfusion in Betracht.

Supraleitende Magnete für Beschleuniger werden sowohl hinsichtlich ihres Kältekreislaufes als auch hinsichtlich ihrer Stromversorgung in Reihe geschaltet. Dabei sind mehrere hundert Einzelmagnete direkt mit der Kälteanlage verbunden, die den Kältemittelkreislauf in den Magneten aufrecht erhält.

Die Beschleunigerstrecke ist dabei in verschiedene Abschnitte unterteilt, an deren Anfang und Ende jeweils Spezialmagnete angeordnet sind, welche Stromzuführungen aufweisen. Innerhalb dieser Abschnitte sind die Magnete sowohl hydraulisch, d. h. hinsichtlich ihres Kältemittels, als auch elektrisch in Serie geschaltet. Dabei ist zweckmäßigerweise vorgesehen, daß die zwischen den Magneten angeordneten Kältemittelverbindungsleitungen auch die elektrischen Verbindungsleitungen aufnehmen.

Bei supraleitenden Einzelmagneten erfolgt die Stromzuführung unabhängig von der Kältemittelversorgung. Allerdings ist üblicherweise vorgesehen, daß die Stromzuführung aus dem Kältemittelreservoir des dem Magneten zugeordneten Kryostaten mit Kältemittel zur Kühlung versorgt wird.

Bei allen supraleitenden Magentsystemen müssen die Einspeisungsstellen für den elektrischen Strom, d. h. die bereits erwähnten Stromzuführungen, besonders gekühlt werden, um deren sog. Kryo- oder Kälteverluste so gering wie möglich zu halten.

Bei den Magnetanordnungen von Einzelmagneten treten diese Kryoverluste an jedem Magnetsystem auf, da diese einzeln mit Strom versorgt werden und daher über separate Stromzuführungen verfügen.

Bei Magnetanordnungen für Beschleunigereinheiten, bei denen die Stromeinspeisung über die jeweils am Anfang und am Ende der einzelnen Abschnitte befindlichen Spezialmagnete vorgesehen ist, können zusätzliche Kryoverluste auch in den die einzelnen Magnete verbindenden Kältemittelleitungen auftreten insbesondere, wenn die einzelnen Magnete nicht nahe nebeneinander angeordnet sind.

Ausgehend vom vorgenannten Stand der Technik ist es Aufgabe der Erfindung, ein Magnetsystem der eingangs genannten Art zu schaffen, welches einen möglichst kälteverlustarmen Betrieb gestattet, wobei die hierzu vorgesehenen Maßnahmen einfach und kostengünstig realisierbar sein sollen.

Die Lösung der Aufgabe ist erfindungsgemäß dadurch gekennzeichnet, daß ein Kontrollkryostat vorgesehen ist, der über Kältemittelleitungen einerseits mit einer zur Versorgung mit gekühltem Kältemittel vorgesehenen Kälteanlage verbunden ist und andererseits mit einer Anzahl von Magnetkryostaten für die Magnetspulen verbunden ist, daß ein einziger Stromanschluß für alle Magnetspulen der einem Kontrollkryostaten zugeordneten Elektromagnete vorgesehen ist, welcher im Kontrollkryostat angeordnet und über Supraleiterkabel mit jedem Elektromagnet verbunden ist, und daß die Supraleiterkabel in der Kältemittelleitung zwischen dem Kontrollkryostaten und den den Elektromagneten zugeordneten Kryostaten untergebracht sind.

Demgemäß ist jeder Kryostat eines Magneten über eine Kältemittelleitung direkt mit dem Kontrollkryostaten verbunden, wobei das vorgesehene Kältemittel, beispielsweise flüssiges Helium oder flüssiger Stickstoff, mittels Druckdifferenz vom Kontrollkryostaten zum Magnetkryostaten übertragen wird.

Die elektrische Versorgung, zu der wie bereits erwähnt Supraleiterkabel vorgesehen sind, erfolgt ebenfalls vom Kontrollkryostaten aus über darin angeordnete Kontakte.

Dabei ist es in vorteilhafter Weiterbildung der Erfindung vorgesehen, die einem Kontrollkryostaten zugeordneten Magnetspulen miteinander elektrisch in Reihe zu schalten. Selbstverständlich besteht aber auch die Möglichkeit jeweils ausgehend vom Kontrollkryostaten die angeschlossenen Magnetspulen elektrisch parallel zueinander anzuschließen.

Der Kontrollkryostat ist so bemessen, daß er als Kältemittelvorratsgefäß dient, wodurch ein Betrieb unabhängig von einer Kälteanlage möglich ist. Dieses ist insbesondere dann von Bedeutung, wenn durch unvorhergesehene äußere Einwirkungen oder innere Fehler der Kälteanlage deren Funktion gestört und die Versorgung mit Kältemittel unterbrochen ist.

Zweckmäßigerweise ist der Kontrollkryostat als separate Einheit vorgesehen, die möglichst nahe bei den zu versorgenden Elektromagneten angeordnet ist. Diese Aufsplittung erweist sich als vorteilhaft im Hinblick auf ihre Montage und im Falle einer Reparatur.

Gemäß einer anderen vorteilhaften Ausgestaltung der Erfindung kann vorgesehen sein, den Kontrollkryostat in der sog. "cold box" der Kälteanlage unterzubringen, wodurch eine besonders ökonomische Lösung gefunden ist, da auf diese Weise die entstehenden Kälteverluste unmittelbar an der Versorgungsstelle mit Kältemittel ausgeglichen werden können.

Da die Betriebskosten von supraleitenden Magnetsystemen insbesondere durch die Kosten für die Bereitstellung des Kältemittels zur Einhaltung der für die Supraleitung erforderlichen Temperatur bestimmt sind, führt jede Minimierung von Kälteverlusten zu einer deutlichen Herabsetzung dieser anteiligen Kosten, so daß die erfindungsgemäß vorgesehene Stromzuführung für mehrere Magnete über einen Kontrollkryostaten als besonders vorteilhaft anzusehen ist.

Desweiteren ist die hohe Verfügbarkeit derart gestalteter Magnetsysteme besonders hervorzuheben, weil bei Wartung oder Ausfall der Kälteanlage der Betrieb ohne Unterbrechung aus dem Kontrollkryostaten bzw. aus zusätzlichen Kältemittelreservoirs ohne Unterbrechung des Betriebes der supraleitenden Magnete möglich ist.

Ein weiterer Vorteil der erfindungsgemäßen Ausgestaltung mit einem Kontrollkryostaten besteht darin, daß die zum Betrieb der supraleitenden Elektromagnete erforderlichen Bedienungselemente allesamt am Kontrollkryostaten angeordnet sein können, so daß der Betrieb derartiger supraleitender Elektromagnete auch in solchen Bereichen möglich ist, die abgeschirmt oder aus sonstigen Gründen gesperrt sind.

Ganz nebenbei ergibt sich mit der erfindungsgemäß vorgesehenen Anordnung eines oder mehrerer supraleitender Elektromagneten und den ihnen zugeordneten Kryostaten gemeinsam mit einem Kontrollkryostaten ein vereinfachtes Kryoschema, d. h. die Ursache möglicher Kälteverluste wird deutlich erkennbar und ihre Beherrschung einfacher.

Ein weiterer Vorteil, der sich mit der erfindungsgemäßen Ausgestaltung des supraleitenden Magnetsystems verbindet, besteht in der Trennung des Kältemittelvorrates in der Kälteanlage bzw. in dem Kontrollkryostaten von den den einzelnen Magneten zugeordneten Kryostaten, so daß beispielsweise beim Quench nur geringe Mengen an Kältemittel verdampfen können und daher ein rasches Rückkühlen des Magneten durch Zufuhr von Kältemittel aus der Kälteanlage möglich ist.

Diese und weitere vorteilhafte Ausgestaltungen der Erfindung sind in den Unteransprüchen angegeben.

Anhand eines in der Zeichnung dargestellten Ausführungsbeispieles sollen die Erfindung sowie vorteilhafte Ausgestaltungen und Vorteile der Erfindung näher erläutert und beschrieben werden.

Es zeigen:

Figur 1 Eine Schemaskizze eines supraleitenden Magnetsystems,

Figur 2 einen Ausschnitt aus Figur 1 mit eingezeichneter Stromversorgung.

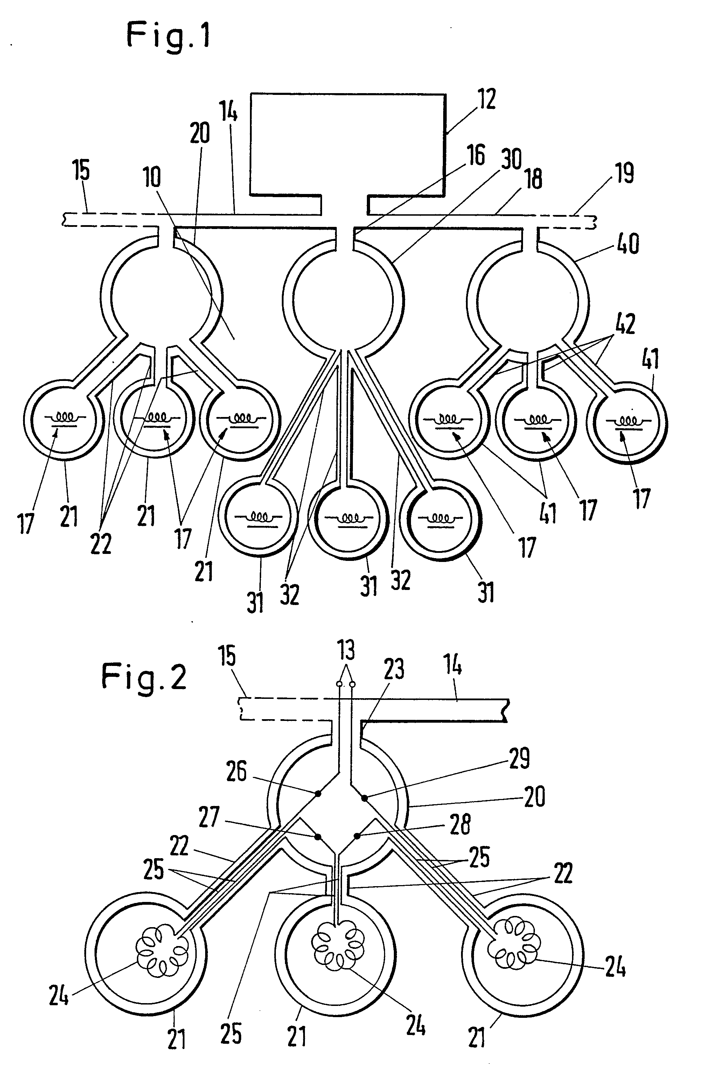

In Figur 1 ist eine schematische Übersicht über ein supraleitendes Magnetsystem 10 dargestellt, das eine Kälteanlage 12 besitzt, die über hochisolierte Kältemittelleitungen 14, 16, 18 mit einer Anzahl von Kontrollkryostaten 20, 30, 40 verbunden sind, die ihrerseits über ebenfalls hochisolierte Kältemittelleitungen 22, 32, 42 mit einer Anzahl von Magnetkryostaten 21, 31, 41 verbunden sind, in welchen - hier symbolisch dargestellt - jeweils supraleitende Elektromagnete 17 untergebracht und gekühlt sind.

Das in Figur 1 dargestellte supraleitende Magnetsystem 10 ist nur in Teilen dargestellt, d. h., von der Vielzahl der über die Kältemittelleitungen 14, 16, 18 mit der Kälteanlage 12 verbundenen Kontrollkryostaten 20, 30, 40 sind nur drei Kontrollkryostate 20, 30, 40 gezeigt.

Die Magnetkryostaten 21, 31, 41 dienen zur Aufnahme von supraleitenden Magnetspulen 24, 34, 44, die aus supraleitendem Draht hergestellt und mittels aus der Kälteanlage 12 zugeführtem Kältemittel auf eine Temperatur unterhalb ihrer kritischen Temperatur abgekühlt sind.

Abhängig von der Kühlkapazität der Kälteanlage 12 sowie abhängig von der Kälteverlustcharakteristik der zur Verbindung dienenden Kältemittelleitungen 14, 16, 18 kann eine Vielzahl von weiteren Kontrollkryostaten, die hier nicht gezeigt sind an die gestrichelt dargestellten Enden der Kältemittelleitungen 15, 19 angeschlossen sein.

Zur besseren Übersichtlichkeit ist in Figur 2 eine auszugsweise Vergrößerung des in Figur 1 auf der linken Seite dargestellten Systems mit dem Kontrollkryostaten 20 und den Magnetkryostaten 21 gezeigt.

Im Flanschdeckel des Kontrollkryostaten 20, ist eine Stromzuführung 13 angeordnet, welche die hochwirksame Isolation der Kältemittelleitung 14 durchdringt und ins Innere des Kontrollkryostaten 20 verlängert ist. Im Inneren des Kontrollkryostaten 20 befinden sich Anschlußpunkte 26, 27, 28, 29, an welchen die ebenfalls supraleitenden Anschlußdrähte 25 der in den Magnetkryostaten 21 befindlichen supraleitenden Magnetspulen 24 angeschlossen sind.

- Aus der in Figur 2 gezeigten Darstellung ist ersichtlich, daß nach der erfindungsgemäßen Anordnung die in den Magnetkryostaten 21 angeordneten supraleitenden Magnetspulen 24 hinsichtlich ihrer Kältemittelversorgung parallel zueinander jedoch hinsichtlich der elektrischen Stromversorgung miteinander in Reihe geschaltet sind.

Die Stromzuführung 13 am Kontrollkryostaten 20 ist in bekannter Weise mit einem Hüllrohr versehen, welches so angeordnet ist, daß es knapp über dem Flüssigkeitsspiegel des Kältemittels endet, wobei die elektrischen Leiter zu den Anschlußpunkten 26, 29 geführt sind. Die Verbindungsleiter zwischen den Anschlußpunkten 26, 27, 28, 29 und den supraleitenden Magnetspulen 24 in den Magnetkryostaten 21 sind als Supraleiterkabel ausgeführt und in der jeweiligen Kältemittelleitung 22, die den Kontrollkryostaten 20 mit dem jeweiligen Magnetkryostaten 21 verbindet, untergebracht.

Selbstverständlich ist es problemlos möglich, an einen Kontrollkryostaten eine größere Anzahl von Magnetkryostaten anzuschließen. Dies ist lediglich eine Frage der Bemessung der Kältemittelkapazität, d. h. des Kühlvolumens, des Kontrollkryostaten.

## Ansprüche

1. Magnetsystem (10), das aus wenigstens einem Elektromagneten (17) mit einer aus supraleitendem Draht gebildeten Magnetspule (24, 34, 44), einem dem Elektromagnet (17) zugeordneten Kryostat (21, 31, 41) sowie aus einer Stromzuführung (13) zur Stromversorgung zur Auferregung der Magnetspule (24, 34, 44) jedes Elektromagneten (17) zusammengesetzt ist, dadurch gekennzeichnet, daß ein Kontrollkryostat (20, 30, 40) vorgesehen ist, der über Kältemittelleitungen (14, 15, 16, 18, 19) einerseits mit einer zur Versorgung mit gekühltem Kältemittel vorgesehenen Kälteanlage (12) verbunden ist und andererseits über Kältemittelleitungen (22, 32, 42) mit einer Anzahl von Magnetkryostaten (21, 31, 41) für die Magnetspulen (24) der zugeordneten Elektromagnete (17) verbunden ist, daß ein einziger Stromanschluß (26, 27, 28, 29) für alle Magnetspulen (24) der einem Kontrollkryostaten (20, 30, 40) zugeordneten Elektromagnete (17) vorgesehen ist, der im Kontrollkryostat (20, 30, 40) angeordnet und über Supraleiterkabel (25) mit jeder Magnetspule (24) verbunden ist, und daß die Supraleiterkabel (25) in der Kältemittelleitung (22, 32, 42) zwischen dem Kontrollkryostaten (20, 30, 40) und den den Magnetspulen (24) zugeordneten Magnetkryostaten (21, 31, 41) untergebracht sind.

2. Magnetsystem nach Anspruch I, dadurch gekennzeichnet, daß jeder weitere demselben Kontrollkryostaten (20, 30, 40) zugeordnete Elektromagnet (17) mit dem vorherigen und dem Kontrollkryostat (20, 30, 40) elektrisch in Reihe geschaltet ist, wobei der Kontrollkryostat (20, 30, 40) Anfang und Ende des elektrischen Stromkreises bildet und die gemeinsamen Anschlußpunkte (26, 27, 28, 29) aufnimmt.

3. Magnetsystem nach Anspruch I, dadurch gekennzeichnet, daß die jeweils demselben Kontrollkryostaten (20, 30, 40) zugeordneten supraleitenden Elektromagnete (17) elektrisch parallel zueinander geschaltet sind, wobei die gemeinsamen Anschlußpunkte (26, 27, 28, 29) im Kontrollkryostaten (20, 30, 40) angeordnet sind.

4. Magnetsystem nach einem der Ansprüche 1 bis 3, dadurch gekennzeichnet, daß der Kontrollkryostat (20, 30, 40) Anfang und Ende des Kältemittelkreises bildet, und daß die einzelnen für die Stromversorgung der Elektromagnete (17) dienenden Supraleiterkabel (25) jeweils in den zur Kältemittelversorgung der Magnetkryostate (21, 31, 41) vorgesehenen Kältemittelleitungen (22, 32, 42) untergebracht sind und im Kontrollkryostaten (20, 30, 40) miteinander verbunden sind.

5. Magnetsystem nach einem der vorherigen Ansprüche, dadurch gekennzeichnet, daß der Kontrollkryostat (20, 30, 40) als Vorratsgefäß für gekühltes Kältemittel dient und einen von der Kältemittelversorgung durch die Kälteanlage (12) unabhängigen Betrieb der Magnetkryostaten (21, 31, 41) ermöglicht.

6. Magnetsystem nach einem der vorherigen Ansprüche, dadurch gekennzeichnet, daß der Kontrollkryostat (20, 30, 40) als separate Einheit ausgebildet ist, die nahe bei den die supraleitenden Magnetspulen (24) aufweisenden Magnetkryostaten (21, 31, 41) angeordnet ist.

7. Magnetsystem nach einem der Ansprüche 1 bis 5, dadurch gekennzeichnet, daß der Kontrollkryostat (20, 30, 40) innerhalb der Kälteanlage (12) angeordnet ist.

Fig.1

Fig.2